# NOUVEAU FASCICULE DE BREVET EUROPEEN

(11) **EP 2 035 626 B2**
(45) Date de publication et mention de la décision concernant l'opposition: **20.07.2016**
(45) Mention de la délivrance du brevet: 13.02.2013
(21) Numéro de dépôt: 07823545.4
(22) Date de dépôt: 03.07.2007
(51) Int. Cl.: E01C 11/16

(54) **PRODUIT GÉOTEXTILE OU D'ARMATURE COMPOSITE ET SON PROCÉDÉ DE FABRICATION**
VERBUNDVERSTÄRKUNG ODER GEOTEXTILPRODUKT UND HERSTELLUNGSVERFAHREN DAFÜR
COMPOSITE REINFORCEMENT OR GEOTEXTILE PRODUCT AND ITS MANUFACTURING PROCESS

(30) Priorité: 04.07.2006 FR 0652787
(43) Date de publication de la demande: 18.03.2009
(73) Titulaire: MDB Texinov SA, 38110 Saint Didier de la Tour (FR)
(72) Inventeur: TANKERE, Jacques, F-01800 Meximieux (FR); DUCOL, Jean-Paul, F-69007 Lyon (FR)
(74) Mandataire: Cabinet Laurent & Charras
(86) Numéro de dépôt international: PCT/FR2007/051589
(87) Numéro de publication internationale: WO 2008/003902

(56) Documents cités:
- EP-A1- 1 158 098
- DE-A1- 19 543 991
- US-A1- 2004 120 765

## Description

### DOMAINE DE L'INVENTION

La présente invention concerne un produit géotextile composite, comprenant plusieurs couches textiles assemblées, destinées à renforcer une strate de bitume ou de béton. Par ailleurs, la présente invention concerne un procédé de fabrication d'un tel produit géotextile composite.

L'objet de l'invention se rapporte donc au domaine des géotextiles et des matériaux de construction.

### ETAT ANTERIEUR DE LA TECHNIQUE

De manière connue, il est nécessaire de renforcer une strate de bitume ou de béton à l'aide d'un produit géotextile composite formant une armature apte à reprendre les contraintes mécaniques qui s'exercent sur la strate de bitume ou de béton. Une telle armature permet ainsi d'augmenter la durée de vie de la strate de bitume ou de béton en limitant sa fissuration. De plus, un tel produit géotextile permet de favoriser l'adhérence d'une telle strate de bitume sur le sol ou le maintien de la cohésion d'une structure en béton.

Pour réaliser une telle armature, on connaît de l'art antérieur des produits géotextiles formés par une grille de renfort positionnée sous la strate de matériau à renforcer. Une telle grille est simplement constituée de fils mécaniquement résistants selon l'une et/ou l'autre de ses directions principales, et notamment à base de fibres de verre ou de fils haute ténacité. Il existe aussi des grilles extrudées étirées notamment en polypropylène ou en polyéthylène.

Néanmoins, l'adjonction d'une simple grille de renfort au niveau de la strate en bitume ou béton à renforcer n'est pas satisfaisante en termes de résistance mécanique et d'adhérence de la strate. En fait, la superficie de l'interface entre la grille et la strate à renforcer est insuffisante pour reprendre les contraintes mécaniques et pour favoriser une bonne affinité avec le matériau.

C'est pourquoi les produits géotextiles de l'art antérieur comprennent généralement une couche supplémentaire solidarisée à la grille de renfort. Dans l'art antérieur, et par exemple dans le document US2004/120765, la couche supplémentaire est généralement constituée d'un non-tissé. Une telle couche supplémentaire est généralement assemblée avec la grille de renfort au moyen d'une liaison par collage ou par thermofixation en de multiples points de contact entre la grille et la couche supplémentaire.

Cependant, de tels produits géotextiles composites présentent des inconvénients tels qu'ils ne remplissent pas de façon satisfaisante leurs fonctions de renfort et d'adhérence. Cela est particulièrement vrai lorsque le produit géotextile doit être installé ou doit fonctionner dans des conditions environnementales difficiles, telles qu'avec une température ou une hygrométrie élevée, en présence de sols abrasifs et/ou de sollicitations mécaniques importantes exercées sur la strate de bitume ou de béton. En particulier, la présence d'eau de pluie sur le chantier rend l'installation de la strate très délicate, car il faut éviter la formation de bulles de vapeur lors de la pose de bitume chaud. Les ouvriers doivent pour cela attendre que le sol sèche, voire le sécher au chalumeau.

En outre, la solidarisation de la grille de renfort avec la couche supplémentaire au moyen d'une liaison par collage ou par thermocollage s'est avérée trop fragile pour supporter les contraintes mécaniques élevées susceptibles de s'exercer sur la strate de bitume ou de béton, que ce soit en cisaillement, en traction ou autre. Ainsi, en présence de telles contraintes, les points collés peuvent être rompus, entraînant la désolidarisation de la grille et de la couche supplémentaire ou la formation éventuelle de plis et, partant, la défaillance du produit géotextile composite, donc la détérioration de la strate.

Au surplus, on doit également veiller à la compatibilité des colles utilisées au regard des contraintes liées à la température (notamment dans le cas de renfort des bitumes) et du milieu chimique, et par exemple du pH, réduisant de fait de manière importante le choix du fabricant.

D'autre part, la structure du matériau constituant la couche supplémentaire, notamment réalisé en non tissé, empêche une imprégnation optimale du produit géotextile au sein de la strate de bitume ou de béton. En effet, les ouvertures d'une telle couche supplémentaire ne permettent pas le passage d'un bitume ou d'un béton présentant une viscosité élevée voire simplement moyenne, comme c'est fréquemment le cas.

Par conséquent, il s'avère nécessaire de prévoir une opération de perforation du matériau constituant la couche supplémentaire. Or, une telle opération représente un surcoûtd'autant plus important que la superficie à traiter est grande. En outre ces trous amoindrissent la résistance mécanique de la couche supplémentaire, même lorsqu'ils sont de faibles dimensions et/ou peu nombreux.

En outre, une couche supplémentaire en non tissé présente une masse surfacique relativement importante, alourdissant ainsi le produit géotextile composite. Or, le transport, le stockage et la mise en oeuvre d'un tel produit géotextile s'avèrent fastidieux.

La présente invention a donc pour objectif de proposer un produit géotextile ou armature de matériau de construction composite dont la couche supplémentaire sera parfaitement liée à la grille de renfort et qui n'empêche pas le passage du matériau à renforcer, donc le coût et le poids surfacique ne seront pas trop élevés.

### EXPOSE DE L'INVENTION

La présente invention concerne un produit géotextile ou armature composite apte à renforcer une strate de matériaux tel que béton ou bitume, dont la grille de renfort et la couche supplémentaire sont aptes à supporter des contraintes mécaniques élevées, tout en permettant une imprégnation ou une miscibilité substantielle avec le matériau à renforcer, pour un coût et un poids surfacique raisonnables.

La présente invention se rapporte donc à un produitgéotextile composite pour renforcer une strate de béton ou de bitume, comme dans la revendication 1. En d'autres termes, la couche supplémentaire est formée par un textile, dont les fils sont suffisamment espacés et mutuellement solidarisés pour favoriser l'imprégnation par le matériau de la strate, tout en résistant aux contraintes mécaniques que subit cette strate. De plus, avec un textile tissé ou tricoté, les ouvertures sont dimensionnées et juxtaposées de manière bien régulière, conduisant à une porosité contrôlée, ce qui garantit l'uniformité de l'adhérence du matériau de la strate sur la grille et le textile ajouré, et ce qui favorise l'intégration de cette couche de textile ajouré dans le béton ou le bitume, facilitant l'évaporation de l'eau que ces matériaux contiennent. En effet, en l'absence d'irrégularité, il ne peut pas se former de point faible, contrairement aux produits géotextiles composites de l'art antérieur.

Par « miscibilité », à la différence de l'acception commune, on désigne la capacité du matériau de la strate à noyer le géotextile ou l'armature, même s'il n'y a pas de mélange des matériaux, car les matériaux peuvent continuer à exister indépendamment les uns des autres.

En pratique, la largeur et/ou la longueur des mailles du textile ajouré peut être comprise entre 0,1 mm et 3. En outre, la largeur et/ou la longueur des mailles de la grille est comprise entre 10 mm et 100 mm, et avantageusement 25 mm.

De telles dimensions permettent une miscibilité optimale dans le produit textile composite de matériaux relativement visqueux, tels que béton ou bitume.

De manière pratique encore, le textile ajouré est composé de fils dont le titre peut être compris entre 8 dtex et 200 dtex, et avantageusement 22 dtex, la masse surfacique du textile ajouré étant comprise entre 8 g/m² et 100 g/m², et avantageusement 17 g/m². Un tel produit géotextile est ainsi relativement léger, ce qui se révèle avantageux pour son transport, son stockage et son installation sur site.

Selon une forme de réalisation particulière de l'invention, les matériaux-composant la grille de renfort et le textile ajouré présentent une température de fusion supérieure à la température de mise en oeuvre d'une strate de bitume, soit environ 170 à 230°C.

Alors que la grille de renfort ne fond pas lorsqu'elle est recouverte de matériaux chauffés (bitume ou résine), conservant ainsi ses propriétés mécaniques nécessaires au renfort de la strate, le textile ajouré assure la fonction d'amélioration de la « miscibilité » avec la matrice et la cohésion finale obtenue. Ce textile ajouré peut dans certains cas assurer la fonction au moment de la mise en oeuvre favorisant par exemple l'évacuation de l'humidité présente ou même provoquant une réaction chimique par la nature d'une fibre spécifique ou d'une enduction adaptée et être ainsi quasi-éliminé à l'issue de cette mise en oeuvre.

En pratique, la grille peut être composée d'un matériau choisi dans le groupe comprenant le polyester, le polypropylène, le polyéthylène haut module, le polyvinyle acétate, les fibres de verre, les fibres de basalte, les fibres d'aramide. Ce matériau est choisi pour s'adapter au pH de la matrice ou de sa mise en oeuvre.

De tels matériaux présentent des propriétés de résistance mécanique et chimique qui les qualifient pour renforcer une strate de bitume ou de béton ou de résine.

De manière pratique, le textile ajouré est composé d'un matériau choisi dans le groupe comprenant le polyester, le polyamide, le polypropylène, les fibres de verre, les fibres de basalte, les fibres d'aramide, ou éventuellement d'une fibre ou enduction permettant une réaction chimique de cohésion.

De tels matériaux présentent des propriétés de résistance mécanique et chimique qui les qualifient pour renforcer une strate de bitume ou de béton. Ils permettent en outre la miscibilité, telle que définie précédemment dans le produit géotextile, avec adaptation en rapport avec le milieu chimique dudit produit, outre les conditions de pH et de température.

Le textile ajouré ainsi réalisé est susceptible de se dissoudre après avoir favorisé la mise en oeuvre du produit géotextile ou de l'armature composite. Ainsi, les fils textiles qui le constituent sont de nature soluble ou thermofusible à une température déterminée, dans le béton ou le bitume constitutif de la strate à renforcer.

En pratique, les fils de liage peuvent être composés d'un matériau choisi dans le groupe comprenant notamment le polyester, le polyamide, le polypropylène, le polyéthylène haut module, le polyvinyle acétate, les fibres de verre ou de basalte, les fibres d'aramide ou similaire tels que commercialisés sous la marque déposée NOMEX ®.

Un tel fit est ainsi apte à résister aux contraintes mécaniques et chimiques, que subit le produit lors de sa mise en oeuvre.

Selon une forme de réalisation particulière de l'invention, le produit géotextile comprend en outre une deuxième couche en un textile ajouré issu de tissage ou de tricotage, cette deuxième couche présentant des ouvertures de dimensions inférieures à celles des ouvertures de la couche textile ajouré.

Par ailleurs, la présente invention concerne un procédé de fabrication d'un produit géotextile ou d'une armature composite pour renforcer une strate de béton ou de bitume. Selon l'invention, ce procédé consiste :
▪ à tricoter une grille de renfort constituée de fils mécaniquement résistants selon les directions de chaîne et/ou de trame ;
▪ à tisser ou à tricoter un textile ajouré présentant des ouvertures de dimensions inférieures aux mailles de la grille ;
▪ à tricoter ce textile ajouré avec cette grille de renfort au moyen de fils de liage.

En d'autres termes, la grille de renfort et le textile ajouré sont assemblés l'un à l'autre par tricotage.

Selon une forme de réalisation particulièrement pratique de l'invention, deux ou trois de ces étapes du procédé sont réalisées concomitamment.

Une telle caractéristique permet une fabrication rapide, donc économique, du produit géotextile composite objet de la présente invention.

Un tel tricotage permet de conférer au produit géotextile composite des résistances mécaniques élevées.

Dans le cas particulier de la réalisation d'une armature composite pour renforcer une strate de bitume, le procédé comporte en outre une étape d'imprégnation ou d'enduction de ladite armature au moyen d'une solution bitumineuse.

Cette étape d'imprégnation ou d'enduction s'effectue en ligne, favorisant ainsi la finition du produit en termes d'homogénéité, de dimensions, de géométrie droit-fil, en raison de l'absence de toute étape de reprise.

Elle permet notamment de conférer une certaine raideur au produit ou à l'armature, facilitant sa mise en oeuvre sur le chantier. Elle favorise en outre l'intégration du matériau dans le complexe final, permettant d'optimiser les performances de ce dernier.

### BREVE DESCRIPTION DES DESSINS

La présente invention et ses avantages qui en découlent, ressortiront aussi de la lecture de la description qui suit, faite en référence aux dessins qui représentent, de façon nullement limitative, des exemples de réalisation de l'invention.
La figure 1 est une représentation schématique en vue de face d'un produit géotextile ou d'armature conforme à l'invention.
La figure 2 est une représentation schématique en section du même produit
La figure 3 est une représentation schématique en vue de face de la mise en oeuvre du même produit dans une application génie civil ou de bâtiment.
La figure 4 est une représentation schématique en section du procédé de fabrication conforme à l'invention.
La figure 5 est une représentation schématique en section d'une application d'un produit d'armature selon l'invention pour un matériau de construction.
La figure 6 est une représentation schématique en vue de face d'un produit géotextile ou d'armature conforme à une forme de réalisation particulière de l'invention.

### MODE DE REALISATION DE L'INVENTION

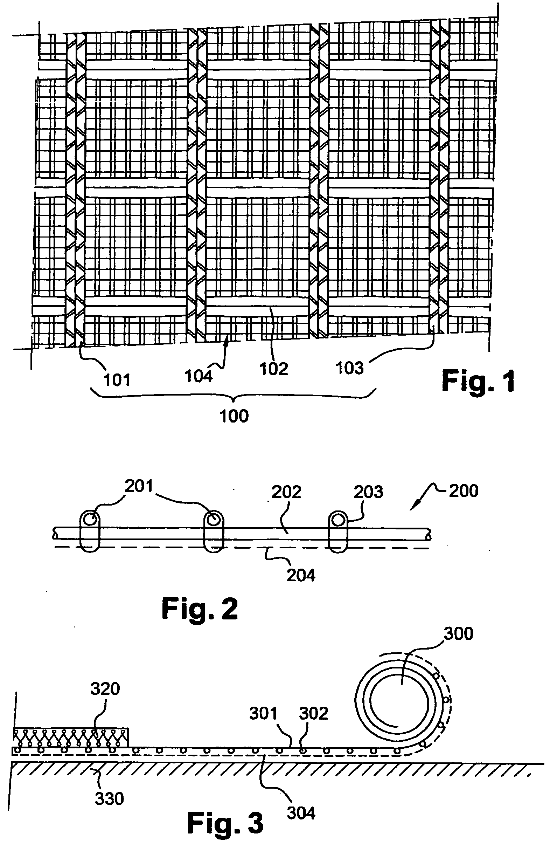

La figure 1 illustre un produit géotextile composite **100** comprenant une grille de renfort constituée de fils **101,102** s'étendant selon les directions de chaîne **101** et de trame **102**. Conformément à l'invention, les fils **101** et **102** présentent des propriétés mécaniques telles, qu'ils sont aptes à résister aux contraintes normalement subies par une strate de matériau en béton ou en bitume. En effet, lorsque le produit géotextile composite estsubstantiellement imprégné d'un tel matériau, il doit reprendre les contraintes mécaniques que ce matériau lui transmet.

Typiquement, les fils **101, 102** constituant la grille de renfort sont constitués de fils techniques à haute résistance, et à haut module de traction, permettant de fait de présenter un faible allongement. Au surplus, ces fils présentent un faible retrait sous l'action de la température lorsqu'ils sont soumis à la chaleur de la solution bitumineuse.

Les fils **101** et **102** de la grille de renfort sont ici constitués du même matériau, en l'occurrence en fil de verre communément appelé sous l'expression anglosaxonne « rovings ».

Les mailles de la grille de renfort présentent ici une forme carrée d'environ 25 mm de coté. Bien évidemment, la taille et la géométrie de ces mailles peuvent être adaptées selon la destination du produit géotextile ou de l'armature.

Conformément à l'invention, le produit géotextile composite 100 comprend en outre une couche supplémentaire constituée d'un textile ajouré 104. En l'occurrence, le textile ajouré 104 est réalisé par tricotage à partir de fils en polyester, matériau thermiquement suffisamment résistant pour supporter la température élevée à laquelle peut être porté du bitume lors de la mise en oeuvre.

Le textile ajouré 104 est ainsi tricoté de manière à présenter des mailles d'environ 0,85 mm. De telles ouvertures, dont les dimensions sont inférieures à celles des mailles de la grille (25 mm), permettent le passage de matériaux relativement visqueux, comme le béton ou le bitume. Ainsi, lors de leur dépôt, de tels matériaux de construction peuvent noyer le produit textile composite **100.** Ce dernier présente en effet une miscibilité substantielle avec de tels matériaux, grâce aux ouvertures du textile ajouré **104.**

De plus, les ouvertures du produit géotextile composite **100** permettent l'évacuation des bulles de vapeur susceptibles de se former lors du dépôt de bitume. Au contraire, avec les produits géotextiles composites de l'art antérieur, ces bulles de vapeur risquent de rester emprisonnées, limitant ainsi la résistance de la strate de bitume, outre entraîner des fissurations.

Pour fabriquer le produit géotextile **100** illustré par la figure 1, on a sélectionné les fils du textile ajouré **104** avec une densité de 22 dtex. En conséquence, la masse surfacique du textile ajouré **104** est de l'ordre de 17 g/m² pour la géométrie de mailles précédemment décrite. Une telle masse surfacique, particulièrement légère, facilite la pose du produit géotextile **100,** y compris à partir de rouleaux de grandes dimensions. De plus, une telle densité linéique confère aux fils constitutifs du textile ajouré suffisamment de finesse etde souplesse pour qu'il passe directement à travers les aiguilles du métier à tricoter, favorisant ainsi l'intégration complète dudit textile ajouré avec la grille de renfort.

Bien évidement, on peut sélectionner le titre (grosseur) du fil composant le textile ajouré **104** pour obtenir une masse surfacique et des propriétés mécaniques spécifiques à l'application recherchée. De même, on peut sélectionner le matériau constitutif du textile ajouré **104** dans le groupe comprenant le polyester, les fibres de verre, les fibres de basalte, les fibres d'aramides, ou encore un fil technique tel que le NOMEX® (marque déposée).

Enfin, on peut également choisir pour ces fils un matériau soluble ou thermofusible à une température déterminée, pour permettre la disparition de la structure après mise en place, notamment lors de la mise en oeuvre en qualité de renfort d'une strate de bitume.

De la même façon, on peut choisir le matériau constitutif des fils **101** et **102** de la grille de renfort en fonction de l'application recherchée. Un tel matériau peut, par exemple, être sélectionné dans le groupe comprenant le polypropylène, le polyvinyle acétate, les fibres de verre, les fibres de basalte ou les fibres d'aramide.

Par ailleurs, il est possible de dimensionner différemment le textile ajouré **104,** en fonction de la résistance mécanique et de la viscosité du matériau à mettre en oeuvre. Du reste, comme on peut le voir sur la figure 1, il y a en fait deux types de mailles différentes successivement juxtaposées, à savoir une maille carrée et une maille rectangulaire. L'essentiel est de conserver une bonne régularité dans les dimensions et la juxtaposition des ouvertures du textile ajouré, ce qui garantit l'uniformité de l'adhérence entre géotextile et strate, donc la résistance de l'ensemble, outre l'intégration du textile ajouré dans le matériau, et notamment dans la solution bitumineuse. La densité linéique, la masse surfacique et la forme de la ou des maille(s) sont déterminées notamment par les contraintes mécaniques à reprendre.

Ainsi, la maille du textile ajouré peut également présenter une forme hexagonale ou rectangulaire ou tout autre forme réalisable sur métier chaîne ou Rachel ou sur métier à tisser selon l'adhérence et/ou la résistance mécanique recherchée pour la strate de matériaux de construction.

Conformément à l'invention, la grille de renfort est tricotée avec le textile ajouré **104** au moyen d'un fil de tricotage **103** en polyester. Conformément à une caractéristique de l'invention, le tricotage du textile ajouré avec la grille est réalisé au moyen d'un métier à mailles jetées de type Rachel. Un tel tricotage permet d'assurer une cohésion mécanique élevée entre le textile ajouré **104** et les fils **101** et **102** formant la grille de renfort.

Selon une réalisation particulière, il est possible d'employer un métier à tricoter de type « Rachel grand trameur », ce qui permet de fabriquer un produit géotextile ou une armature composite avec une cadence rapide et une grande largeur, typiquement supérieure à 5 m, voire à 6 m. Une telle largeur de produit géotextile peut être particulièrement adaptée, par exemple pour la construction de rubans routiers, la grande largeur du produit géotextile procurant alors un avantage important car elle permet une installation très rapide.

Comme le montre la figure 2, les fils de trame 202 sont comprimés entre les fils de chaîne **201** et le textile ajouré **204** par l'intermédiaire d'un fil de tricotage **203.** La tenue des fils de trame **202** est donc effectuée par une simple mise sous pression.

Un avantage important d'un tel textile ajouré réside dans la régularité des ouvertures qu'il présente, contrairement à d'autres textiles comme les non tissés. Ainsi, la pénétration du bitume ou du béton à travers le produit géotextile composite s'effectue de manière uniforme, éliminant ainsi les points de faiblesse de la strate déposée.

Avec de telles ouvertures dans la grille et le textile ajouré, il est possible de réaliser une imprégnation ou enduction par une substance bitumineuse ou autre solution permettant d'améliorer sa cohésion avec la strate à renforcer bitume, béton ou résine directement en ligne avec la machine de production, ce qui facilite notablement l'installation sur le site de construction, car ces éléments ainsi recouverts présentent une bonne affinité avec la matrice de la strate déposée ou du panneau réalisé.

Cette imprégnation ou enduction est réalisée par des dispositifs connus de l'homme du métier, directement installé en sortie du métier à tricoter.

Ainsi, les risques de perte d'adhérence ou de délaminage de la strate de bitume, de béton ou de résine peuvent être notablement diminués par l'utilisation du produit géotextile objet de la présente invention. De plus, la miscibilité de celui-ci avec les strates à renforcer est nettement augmentée, ce qui accroît la résistance mécanique de la strate à renforcer dans la mesure où le produit géotextile reprend davantage de contraintes mécaniques.

En outre, compte tenu de l'assemblage par tricotage des éléments du produit géotextile composite de l'invention, le coût de revient d'un tel produit est inférieur à ceux des produits géotextiles de l'art antérieur, car le nombre d'opérations et/ou la quantité de colle et/ou l'énergie calorifique nécessaire à sa fabrication se trouvent réduits ou éliminés. Il est ainsi possible de fabriquer un produit géotextile composite dont la résistance en traction peut varier de 20 kN jusqu'à 400 kN selon les contraintes subies par l'ouvrage à renforcer.

La figure 3 illustre une étape de construction d'une strate de bitume **320** sur une chaussée ou sur un sol à renforcer **330.** Le produit géotextile ou l'armature composite de la présente invention est ici mis en oeuvre sous forme de rouleau **300** développé sur la chaussée ou le sol **330,** puis recouvert et complètement imprégné par le bitume ou la résine **320.**

Dans l'exemple de la figure 3, le textile ajouré **304** est positionné contre la chaussée ou le sol **330** à renforcer, tandis que la grille de renfort constitué des fils de chaîne **301** et de trame **302** est placée au dessus du textile ajouré au plus près de la couche bitumineuse. Dans d'autres cas la grille de renfort pourra être placé sous le textile ajouré

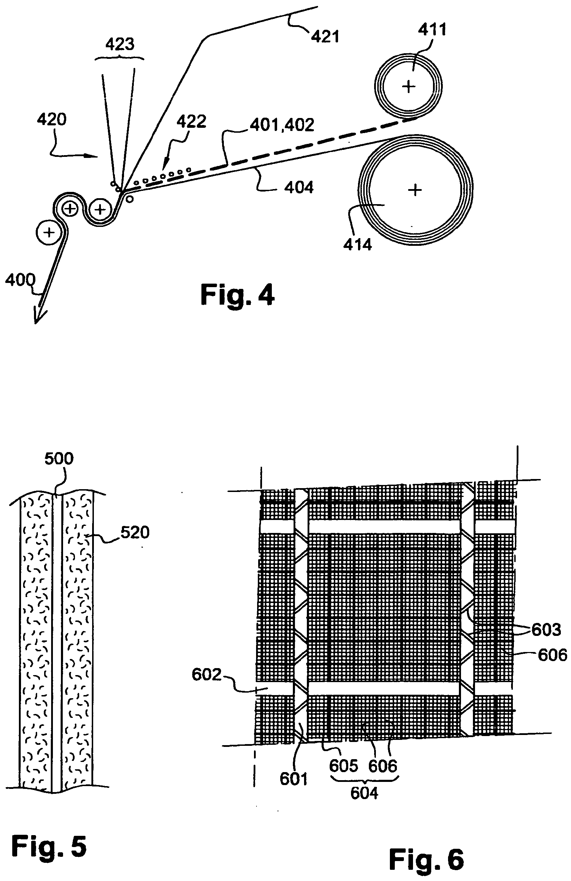

La figure 4 illustre un dispositif de fabrication du produit géotextile selon l'invention. Le textile ajouré **404** provient d'un rouleau **414.** Il est introduit avec les fils **421** et **422** de la grille de renfort simultanément. Ces éléments sont associés grâce aux fils de liage **423,** dans les organes de tricotage d'un métier Rachel trameur. Les aiguilles à tricoter et les guide-fils sont ici schématisés simplement dans la région **420** de la figure 4. En effet, la technique de tricotage à maille jetées sur un métier de type Rachel est largement connue de l'art antérieur. Pour cela, il faut néanmoins s'assurer de la compatibilité de la jauge du métier à tricoter tout en veillant à positionner correctement les aiguilles et les guide-fils.

Dans une variante on pourra rajouter un deuxième textile ajouré ou non **411,** qui pourra également être un voile ou un film papier ou synthétique

Dans une variante, au cours de ce même procédé, le textile ajouré **404** est réalisé par tricotage au moyen d'aiguilles **420,** concomitamment à l'assemblage des fils de chaîne et de trame **401, 402.** L'ensemble grille et textile ajouré est tricoté simultanément de manière à réaliser un produit géotextile ou une armature composite **400** fini. Dans ce cas la jauge et la disposition des organes de tricotage sont particulièrement adaptées pour obtenir la simultanéité des géométries et des écartements de fils de la grille de renfort et du textile ajouré. La figure 6 illustre cette configuration

Il est même possible, par un tel procédé de fabrication directe, de réaliser un textile ajouré **604,** tel qu'illustré par la figure 6, composé d'un premier textile ajouré **605** présentant de grandes mailles et d'un second textile ajouré **606** présentant des mailles plus petites. Un tel textile ajouré **604** présente alors une surface supérieure exposée au béton, au bitume ou à la résine, conférant ainsi au produit géotextile ou à l'armature une plus grande interface affinitaire avec la strate et une résistance mécanique supérieure.

Par ailleurs, la figure 5 illustre un produit d'armature de bâtiment composite **500** conforme à l'invention noyé au sein d'une strate **520** en béton ou résine. L'ensemble forme ainsi un panneau préfabriqué présentant des propriétés mécaniques renforcées. Le produit 500 peut même être précontraint dans la matrice **520** qui le reçoit, afin d'optimiser les propriétés mécaniques du panneau ainsi réalisé.

## Revendications

1. Produit géotextile ou de construction, composite (100 ; 200 ; 300 ; 400 ; 500) pour renforcer une strate de béton (520) ou de bitume (320), comprenant au moins une grille de renfort constituée de fils (101, 102 ; 201, 202 ; 301, 302 ; 401, 402) mécaniquement résistants selon les directions de chaîne et/ou de trame, ***caractérisé* en ce qu'**il comprend en outre au moins une couche en un textile ajouré (104 ; 204 ; 304 ; 404) issu de tissage ou de tricotage, ledit textile ajouré (104 ; 204 ; 304 ; 404) présentant des ouvertures de dimensions inférieures à celles des mailles de ladite grille, la largeur et/ou la longueur des mailles définissant les ouvertures dudit textile ajouré étant comprise entre 0,1 mm et 3 mm, ledit textile ajouré (104 ; 204 ; 304 ; 404 ; 604) étant tricoté avec la grille au moyen d'au moins un fil de tricotage (103 ; 203 ; 403), de manière à obtenir une miscibilité substantielle du béton ou du bitume (320 ; 520) dans ledit produit textile composite (100 ; 200 ; 300 ; 400 ; 500).

2. Produit géotextile ou de construction (100 ; 200 ; 300 ; 400 ; 500) selon la revendication 1, ***caractérisé* en ce que** la grille de renfort est composée d'un matériau choisi dans le groupe comprenant le polyester, le polyéthylène haut module, le polypropylène, le polyvinyle acétate, les fibres de verre, les fibres de basalte, les fibres d'aramide.

3. Produit géotextile ou de construction (100 ; 200 ; 300 ; 400 ; 500) selon l'une des revendications 1 et 2, ***caractérisé* en ce que** le textile ajouré (104 ; 204 ; 304 ; 404 ; 604) est composé d'un matériau choisi dans le groupe comprenant le polyester, les fibres de verre, les fibres de basalte, les fibres d'aramide, un polyamide.

4. Produit géotextile ou de construction (100 ; 200 ; 300 ; 400 ; 500) selon l'une des revendications 1 et 2, ***caractérisé* en ce que** le textile ajouré (104 ; 204 ; 304 ; 404 ; 604) est composé d'un matériau soluble ou thermofusible à une température déterminée dans le béton ou le bitume constitutif de la strate à renforcer.

5. Produit géotextile ou de construction (100 ; 200 ; 300 ; 400 ; 500) selon l'une des revendications 1 à 3, ***caractérisé* en ce que** les matériaux composant la grille de renfort et le textile ajouré (104 ; 204 ; 304 ; 404 ; 604) présentent une température de fusion supérieure à la température de mise en oeuvre d'une strate de bitume, soit environ 170 à 230°C.

6. Produit géotextile ou de construction (100 ; 200 ; 300 ; 400 ; 500) selon l'une des revendications 1 à 5, ***caractérisé* en ce que** la largeur et/ou la longueur des mailles de ladite grille est comprise entre 10 mm et 100 mm, et avantageusement 25 mm.

7. Produit géotextile ou de construction (100 ; 200 ; 300 ; 400 ; 500) selon l'une des revendications précédentes, ***caractérisé* en ce que** le textile ajouré (104 ; 204 ; 304 ; 404 ; 604) est composé de fils dont le titre est compris entre 8 dtex et 200 dtex, et avantageusement 22 dtex, et **en ce que** la masse surfacique dudit textile ajouré (104 ; 204 ; 304 ; 404) est comprise entre 8 g/m² et 100 g/m², et avantageusement 17 g/m².

8. Produit géotextile ou de construction (100 ; 200 ; 300 ; 400 ; 500 ; 600) selon l'une des revendications précédentes, ***caractérisé* en ce que** le fil de tricotage (103 ; 203 ; 403 ; 603) est composé d'un matériau choisi dans le groupe comprenant le polyester, le polyéthylène haut module, le polypropylène, le polyvinyle acétate, les fibres de verre, les fibres de basalte, les fibres d'aramide.

9. Produit géotextile ou de construction (600) selon l'une des revendications précédentes, ***caractérisé* en ce qu'**il comprend en outre une deuxième couche en un textile ajouré (606) issu de tissage ou de tricotage, ladite deuxième couche présentant des ouvertures de dimensions inférieures à celles des ouvertures de la couche en textile ajouré (605).

10. Procédé de réalisation d'un produit géotextile ou de construction (100 ; 200 ; 300 ; 400 ; 500) composite pour renforcer une strate de béton (520) ou de bitume (320), ***caractérisé* en ce qu'**il consiste :
▪ à tricoter une grille de renfort constituée de fils (101, 102 ; 201, 202 ; 301, 302 ; 401, 402) mécaniquement résistants selon les directions de chaîne et/ou de trame ;
▪ à tisser ou à tricoter un textile ajouré (104 ; 204 ; 304 ; 404 ; 604) présentant des ouvertures de dimensions inférieures aux mailles de la grille, la largeur et/ou la longueur des mailles définissant les ouvertures dudit textile ajouré étant comprise entre 0,1 mm et 3 mm;
▪ à tricoter ledit textile ajouré (104 ; 204 ; 304 ; 404 ; 604) avec ladite grille de renfort au moyen d'au moins un fil de tricotage (103 ; 203 ; 403).

11. Procédé de réalisation d'un produit géotextile ou de construction selon la revendication 10, ***caractérisé* en ce que** deux ou trois desdites étapes sont réalisées concomitamment.

12. Procédé de réalisation d'un produit géotextile ou de construction selon l'une des revendications 10 et 11, ***caractérisé* en ce que** l'étape de tricotage dudit textile ajouré (104 ; 204 ; 304 ; 404 ; 604) sur ladite grille de renfort est réalisée au moyen d'un métier à tramer de type Rachel.

13. Procédé de réalisation d'un produit géotextile ou de construction composite pour renforcer une strate de bitume selon l'une des revendications 10 à 12, ***caractérisé* en ce qu'**il comporte en outre une étape d'imprégnation ou d'enduction dudit produit au moyen d'une solution bitumineuse.

14. Procédé de réalisation d'un produit géotextile ou de construction composite pour renforcer une strate de bitume selon la revendication 13, ***caractérisé* en ce que** ladite étape d'imprégnation ou d'enduction est réalisée en ligne.

## Patentansprüche

1. Verbundprodukt aus Geotextil bzw. für den Baubedarf (100; 200; 300; 400; 500) zur Verstärkung einer Lage aus Beton (520) bzw. aus Bitumen (320), mit mindestens einem Verstärkungsgitter aus Fäden (101, 102; 201, 202; 301, 302; 401, 402), die in der Ketten- und/oder Schussrichtung mechanisch widerstandsfähig sind, **dadurch gekennzeichnet, dass** es ferner mindestens eine Schicht aus einem durchbrochenen, durch Weben bzw. Wirken hergestellten Textil (104; 204; 304; 404) umfasst, wobei das durchbrochene Textil (104; 204; 304; 404) Öffnungen mit Abmessungen aufweist, die kleiner sind als diejenigen der Maschen des Gitters, wobei die Breite und/oder die Länge der Maschen, welche die Öffnungen des durchbrochenen Textils definieren, zwischen 0,1 mm und 3 mm liegen betragen, wobei das durchbrochene Textil (104; 204; 304; 404; 604) mit dem Gitter mittels mindestens eines Wirkfadens (103; 203; 403) so verwirkt ist, dass eine weitestgehende Mischbarkeit des Betons bzw. des Bitumens (320; 520) in dem textilen Verbundprodukt (100; 200; 300; 400; 500) erzielt wird.

2. Geotextil- bzw. Bauprodukt (100; 200; 300; 400; 500) nach Anspruch 1, **dadurch gekennzeichnet, dass** das Verstärkungsgitter aus einem Material besteht, das aus der Gruppe gewählt ist, die Polyester, hochmodulares Polyethylen, Polypropylen, Polyvinylacetat, Glasfasern, Basaltfasern, Aramidfasern umfasst.

3. Geotextil- bzw. Bauprodukt (100; 200; 300; 400; 500) nach einem der Ansprüche 1 und 2, **dadurch gekennzeichnet, dass** das durchbrochene Textil (104; 204; 304; 404; 604) aus einem Material besteht, das aus der Gruppe gewählt ist, die Polyester, Glasfasern, Basaltfasern, Aramidfasern, ein Polyamid umfasst.

4. Geotextil- bzw. Bauprodukt (100; 200; 300; 400; 500) nach einem der Ansprüche 1 und 2, **dadurch gekennzeichnet, dass** das durchbrochene Textil (104; 204; 304; 404; 604) aus einem Material besteht, das bei einer bestimmten Temperatur in dem die zu verstärkende Lage bildenden Beton bzw. Bitumen löslich bzw. thermoschmelzbar ist.

5. Geotextil- bzw. Bauprodukt (100; 200; 300; 400; 500) nach einem der Ansprüche 1 bis 3, **dadurch gekennzeichnet, dass** die Materialien des Verstärkungsgitters und des durchbrochenen Textils (104; 204; 304; 404; 604) eine Schmelztemperatur aufweisen, die höher ist als die Temperatur für das Einbringen einer Bitumenlage, und zwar ca. 170 bis 230 °C.

6. Geotextil- bzw. Bauprodukt (100; 200; 300; 400; 500) nach einem der Ansprüche 1 bis 5, **dadurch gekennzeichnet, dass** die Breite und/oder die Länge der Maschen des Gitters zwischen 10 mm und 100 mm liegen und vorteilhafterweise 25 mm betragen.

7. Geotextil- bzw. Bauprodukt (100; 200; 300; 400; 500) nach einem der vorhergehenden Ansprüche, **dadurch gekennzeichnet, dass** das durchbrochene Textil (104; 204; 304; 404; 604) aus Fäden besteht, deren Titer zwischen 8 dtex und 200 dtex liegt und vorteilhafterweise 22 dtex beträgt, und dass das Flächengewicht des durchbrochenen Textils (104; 204; 304; 404) zwischen 8 g/m² und 100 g/m² liegt und vorteilharterweise 17 g/m² beträgt.

8. Geotextil- bzw. Bauprodukt (100; 200; 300; 400; 500) nach einem der vorhergehenden Ansprüche, **dadurch gekennzeichnet, dass** der Wirkfaden (103; 203; 403; 603) aus einem Material besteht, das aus der Gruppe gewählt ist, die Polyester, hochmodulares Polyethylen, Polypropylen, Polyvinylacetat, Glasfasern, Basaltfasern, Aramidfasern umfasst.

9. Geotextil- bzw. Bauprodukt (600) nach einem der vorhergehenden Ansprüche, **dadurch gekennzeichnet, dass** es ferner eine zweite Schicht aus einem durchbrochenen, durch Weben bzw. Wirken hergestellten Textil (606) umfasst, wobei die zweite Schicht Öffnungen aufweist, deren Abmessungen kleiner sind als diejenigen der Öffnungen der Schicht aus durchbrochenem Textil (605).

10. Verfahren zur Herstellung eines Verbundprodukts aus Geotextil bzw. für den Baubedarf (100; 200; 300; 400; 500) zur Verstärkung einer Lage aus Beton (520) bzw. aus Bitumen (320), **dadurch gekennzeichnet, dass** es darin besteht,
- durch Wirken ein Verstärkungsgitter herzustellen, das aus Fäden (101, 102; 201, 202; 301, 302; 401, 402) besteht, die in der Ketten- und/oder Schussrichtung mechanisch widerstandsfähig sind;
- durch Weben bzw. Wirken ein durchbrochenes Textil (104; 204; 304; 404; 604) herzustellen, das Öffnungen mit Abmessungen aufweist, die kleiner sind als diejenigen der Maschen des Gitters, wobei die Breite und/oder die Länge der Maschen, welche die Öffnungen des durchbrochenen Textils definieren, zwischen 0,1 mm und 3 mm liegen betragen;
- das durchbrochene Textil (104; 204; 304; 404; 604) mit dem Verstärkungsgitter mittels mindestens eines Wirkfadens (103; 203; 403) zu verwirken.

11. Verfahren zur Herstellung eines Geotextil- bzw. Bauprodukts nach Anspruch 10, **dadurch gekennzeichnet, dass** zwei oder drei der Schritte gleichzeitig durchgeführt werden.

12. Verfahren zur Herstellung eines Geotextil- bzw. Bauprodukts nach einem der Ansprüche 10 und 11, **dadurch gekennzeichnet, dass** der Schritt des Wirkens des durchbrochenen Textils (104; 204; 304; 404; 604) mittels einer Wirkmaschine vom Typ Rachel erfolgt.

13. Verfahren zur Herstellung eines Verbundprodukts aus Geotextil bzw. für den Baubedarf zur Verstärkung einer Bitumenlage nach einem der Ansprüche 10 bis 12, **dadurch gekennzeichnet, dass** es ferner einen Schritt der Imprägnierung bzw. der Beschichtung des Produkts mittels einer bituminösen Lösung umfasst.

14. Verfahren zur Herstellung eines Verbundprodukts aus Geotextil bzw. für den Baubedarf zur Verstärkung einer Bitumenlage nach Anspruch 13, **dadurch gekennzeichnet, dass** der Schritt der Imprägnierung bzw. der Beschichtung inline erfolgt.

## Claims

1. A composite geotextile or construction product (100 ; 200 ; 300 ; 400 ; 500) for reinforcing a stratum of concrete (520) or of bitumen (320), comprising at least one reinforcing grid consisting of yarns (101, 102 ; 201, 202 ; 301, 302 ; 401, 402) which are mechanically strong in the warp and/or weft directions, **characterized in that** it further comprises at least one layer of an openwork textile (104 ; 204 ; 304 ; 404) produced by weaving or knitting, the said openwork textile (104 ; 204 ; 304 ; 404) having openings that are smaller than those of the meshes of the said grid, the width and/or length of the meshes of the openwork textile is between 0.1 mm and 3 mm, the said openwork textile (104 ; 204 ; 304 ; 404) being knitted with the grid by means of at least one knitting yarn (103 ; 203 ; 403), in order to obtain a substantial miscibility of the concrete or the bitumen (320 ; 520) in the said composite textile product (100 ; 200 ; 300 ; 400 ; 500).

2. The geotextile or construction product (100 ; 200 ; 300 ; 400 ; 500) according to claims 1, **characterized in that** the reinforcing grid consists of a material selected from the group comprising polyester, high modulus polyethylene, polypropylene, polyvinyl acetate, glass fibres, basalt fibres, aramid fibres.

3. The geotextile or construction product (100 ; 200 ; 300 ; 400 ; 500) according to one of claims 1 and 2, **characterized in that** the openwork textile (104 ; 204 ; 304 ; 404 ; 604) consists of a material selected from the group comprising polyester, glass fibres, basalt fibres, aramid fibres, a polyamide.

4. The geotextile or construction product (100 ; 200 ; 300 ; 400 ; 500) according to one of claims 1 and 2, **characterized in that** the openwork textile textile (104; 204 ; 304 ; 404 ; 604) consists of a soluble or thermofusible material at a predefined temperature in the concrete or the bitumen constituting the stratum to be reinforced.

5. The geotextile or construction product (100 ; 200 ; 300 ; 400 ; 500) according to one of claims 1 to 3, **characterized in that** the materials constituting the reinforcing grid and the openwork textile (104; 204 ; 304 ; 404 ; 604) have a melting point higher than the temperature of use of a stratum of bitumen, or about 170 to 230°C.

6. The geotextile or construction product (100 ; 200 ; 300 ; 400 ; 500) according to one of claims 1 to 5, **characterized in that** the width and/or the length of the meshes of the said grid is between 10 mm and 100 mm, and advantageously 25 mm.

7. The geotextile or construction product (100 ; 200 ; 300 ; 400 ; 500) according to anyone of the preceeding claims, **characterized in that** the openwork textile consists of yarns having a size between 8 dtex and 200 dtex, and advantageously 22 dtex, and **in that** the basis weight of the said openwork textile is between 8 g/m² and 100 g/m², and advantageously 17 g/m².

8. The geotextile or construction product (100 ; 200 ; 300 ; 400 ; 500 ; 600) according to anyone of the preceding claims, **characterized in that** the knitting yarn (103 ; 203 ; 403 ; 603) consists of a material selected from the group comprising polyester, high modulus polyethylene, polypropylene, polyvinyl acetate, glass fibres, basalt fibres, aramid fibres.

9. The geotextile or construction product (600) according to anyone of the preceding claims, **characterized in that** it further comprises a second layer of openwork textile (606) produced by weaving or knitting, the said second layer having openings that are smaller than those of the openings of the layer of openwork textile (605).

10. A method for producing a composite geotextile or construction product (100 ; 200 ; 300 ; 400 ; 500) for reinforcing a stratum of concrete (520) or of bitumen (320), **characterized in that** it consists in:
▪ knitting a reinforcing grid consisting of yarns (101, 102 ; 201, 202 ; 301, 302 ; 401, 402) which are mechanically strong in the warp and/or weft directions;
▪ weaving or knitting an openwork textile (104 ; 204 ; 304 ; 404 ; 604) having openings that are smaller than those of the meshes of the said grid, the width and/or length of the meshes of the openwork textile being between 0.1 mm and 3 mm ;
▪ knitting the said openwork textile (104 ; 204 ; 304 ; 404 ; 604) with the reinforcing grid by means of at least one knitting yarn (103 ; 203 ; 403).

11. The method for producing a geotextile or construction product according to claim 10, characterzied in that two or three of the said steps are carried out simultaneously.

12. The method for producing a geotextile or construction product according to either claim 10 or 11, **characterized in that** the step of knitting of the said openwork textile textile (104 ; 204 ; 304 ; 404 ; 604) to the said reinforcing grid is carried out by means of a Raschel machine.

13. The method for producing a composite geotextile or construction product for reinforcing a stratum of bitumen according to one of claims 10 to 12, **characterized in that** it further comprises a step of impregnation or coating of the said product by means of a bituminous solution.

14. The method for producing a composite geotextile or construction product for reinforcing a stratum of bitumen according to claim 13, **characterized in that** said step of impregnation or coating of the said product carried out in line.
